Europäisches Patentamt

European Patent Office

Office européen des brevets

(11) Veröffentlichungsnummer: **0 140 822**
A2

# (12) EUROPÄISCHE PATENTANMELDUNG

(21) Anmeldenummer: **84730097.7**

(22) Anmeldetag: **17.09.84**

(51) Int. Cl.⁴: **H 05 K 5/06,** H 04 N 5/64,
A 61 C 19/00, G 09 B 23/28

(30) Priorität: **17.09.83 DE 8327123 U**

(43) Veröffentlichungstag der Anmeldung: **08.05.85**
**Patentblatt 85/19**

(84) Benannte Vertragsstaaten: **AT BE CH DE FR GB IT LI LU
NL SE**

(71) Anmelder: **DTV KG Deutsche TV-und Videogesellschaft
mbH für Zahnmedizin & Co., Ifenpfad 2-4,
D-1000 Berlin 42 (DE)**

(72) Erfinder: **Ammann, Alexander, Schweinfurthstrasse 10,
D-1000 Berlin 33 (DE)**

(74) Vertreter: **Christiansen, Henning, Dipl.-Ing., Unter den
Eichen 108a, D-1000 Berlin 45 (DE)**

(54) **Informationsgerät mit einem Wiedergabeteil für Bildinformationen.**

㊸ Informationsgerät mit Wiedergabeteil für Bildinformationen, Bildschirm und Bedienungstasten, insbesondere zur Verwendung in Arztpraxen, wobei Wiedergabegerät, Bildschirm und Bedienungstasten gegen Spritzwasser geschützt sind und eine Tastatur mit darin zusammengefassten Bedienungstasten eine glatte Bedienungsoberfläche aufweist.

0140822

/2

DTV KG                                      17. September 1984
Deutsche TV- und Videogesellschaft
mbH für Zahnmedizin & Co
1000 Berlin

LOG33.1-EU

---

### Informationsgerät mit einem Wiedergabeteil für Bildinformationen

---

## B e s c h r e i b u n g

Die Erfindung betrifft ein Informationsgerät mit Wiedergabegerät für einen Bildträger, Bildschirm und Bedienungstasten. Ein solches Informationsgerät, das zur ärztlichen
und zahnärztlichen Fortbildung dient, ist bekannt, wobei
als Bildträger bisher ein Kinofilm benutzt ist.

/2

Der Erfindung liegt die Aufgabe zugrunde, ein solches Gerät den praktischen Anforderungen, wie sie in Arzt-, insbesondere Zahnarztpraxen, auftreten, besser anzupassen und insbesondere ergonomisch auszugestalten.

Diese Aufgabe wird dadurch gelöst, daß Wiedergabegerät, Bildschirm und Bedienungstasten gegen Spritzwasser geschützt angeordnet sind und eine Tastatur mit darin zusammengefaßten Bedienungstasten eine glatte Bedienungsoberfläche aufweist.

Durch eine solche Gestaltung eignet sich das Informationsgerät besonders für Zahnarztpraxen, wo beim Verfolgen der Darbietungen auf dem Bildschirm zugleich mit dem Bohrer etc. im Handstück der zahnärztlichen Bohrmaschine an Demonstrationsobjekten bei eingeschaltetem Kühlwasserstrahl gearbeitet wird. Durch den Spritzwasserschutz sind die elektrischen Teile des Informationsgerätes vor Beschädigung durch Spritzwasser geschützt und die glatten Bedienungsoberflächen sorgen dafür, daß nach Benutzung die Reinigung problemlos erfolgen kann.

Bevorzugt wird der Bildschirm durch eine vorgesetzte Scheibe geschützt, die spritzwasserdicht eingesetzt ist.

Gleichzeitig zum Schutz gegen Spritzwasser und zur Erleichterung der Reinigung sind die zu einer Tastatur zusammengefaßten Bedienungstasten als Folientastatur ausgebildet.

Das Informationsgerät enthält einen Btx-Anschluß, welcher die Übermittlung von Infomationen über einen Fernsprechanschluß gestattet. Als lokale Wiedergabestation für Bild- und Toninformationen dient bei einer vorteilhaften Ausführung der Erfindung ein Videorecorder bzw. ein Bildplattenspieler. Neben der Bedienungstastatur befindet sich ein Fach zur Aufnahme eines Druckers, der in der Lage ist, über Bildschirmtext eingehende Informationen zu dokumentieren.

Die Bestandteile des Informationsgerätes sind bevorzugt und in vorteilhafter zusätzlicher erfinderischer Ausgestaltung in ergonomischer Weise angeordnet, d.h., daß sich der Bildschirm in Augenhöhe eines Sitzenden befindet, daß alle Bedienungselemente, insbesondere die Bedienungstasten in Griffhöhe eines Sitzenden vorgesehen sind und daß mindestens eine Schublade in Griffhöhe eines Sitzenden herauszieh- oder- schwenkbar ist. Ferner ist die Tastatur bevorzugt pultartig zwischen den schubladenförmigen Auszügen und dem Bildschirm (in vertikaler Folge) angeordnet.

Mindestens eine der Schublade ist zur Aufnahme von Instrumenten vorgesehen und kann entsprechende Unterteilungen aufweisen. Eine weitere Schublade ist an die Form von Diakassetten und/oder ärztliches, insbesondere zahnärztliches, Demon-strationsmaterial angepaßt. Für Instrumente, Videokassetten oder Demonstrationsmaterial vorgesehene Unterteilungen können aus Kunststoff, insbesondere Schaumstoff oder aus tiefgezogenem Blech geformt sein.

Bei einer anderen bevorzugten Ausführungsform ist die Instrumentenschublade in der Weise unterteilt, daß in einer Hälfte eine Glasplatte mit Beleuchtungseinrichtung zur rückwärtigen Durchleuchtung von Röntgenbildern Platz findet, so daß die Verwendungsmöglichkeiten des Gerätes zusätzlich vergrößert sind.

Außer dem Bildschirm sind günstigerweise weitere Mittel zur Darbietung von visuellen Informationen in Augenhöhe eines Sitzenden angebracht. Der Bildschirm ist bevorzugt auf einem Drehteller angeordnet, der eine Ausrichtung entsprechend der Blickrichtung ermöglicht.

Bei dem erfindungsgemäßen Informationsgerät ist die Bedientastatur - in vertikal ausgerichteter Folge von oben nach unten - zwischen Bildschirm und Materialschubladen bzw. -auszügen angeordnet. Damit ist diese auch bei herausgezogenen Schubladen frei zugänglich. Das Demonstrationsmaterial in den (teilweise) herausgezogenen Schubladen ist also nach Bedarf verfügbar und kann betrachtet bzw. herausgenommen, untersucht und zurückgelegt werden, ohne daß die Sicht auf den Bildschirm eingeschränkt oder die Bedienungsmöglichkeit behindert ist. Desgleichen behindert auch die Betätigung der Bedienungselemente innerhalb des Tastenfeldes die Sicht auf den Bildschirm nicht.

Bei herausgezogenen Schubladen schließt sich die so gebildete "Arbeitsfläche" für das Demonstrationsmaterial über die bevorzugt geneigte, d.h. pultförmige, Fläche der Betätigungselemente an die visuelle Darbietungsebene des Bildschirms an, wobei sich für eine sitzende Person optimale Zugriffsmöglichkeiten und Betrachtungsabstände ergeben. Bei einer (innerhalb einer Schublade vorgesehenen) horizontal ausziehbaren beleuchteten Fläche zur Betrachtung von Röntgenbildern wird die visuelle Darbietungsfläche in die Horizontale - auf die Bedienungsperson hin - erweitert. Bei mehreren übereinander angeordneten Auszügen mit relativ geringer Höhe läßt sich die horizontale Arbeitsund Betrachtungsfläche durch (Hineinschieben oder Herausziehen der einzelnen Elemente) schnell unterschiedlichen Anforderungen anpassen. Es steht somit eine große Menge von Lehr-, Anschauungs- und Arbeitsmaterial unmittelbar zur Verfügung, ohne daß die Bedienungsperson ihre Betrachtungsposition verlassen muß. Bei eingeschobenen Schubladen ist die Anordnung äußerst kompakt und raumsparend.

Obgleich bei ausgezogenen Schubladen insgesamt ein großes Arbeits- und Sichtfeld zur Verfügung steht, das in etwa den Ausschnitt eines Viertelzylinders - mit in Querrichtung durch den Kopf der Bedienungsperson verlaufender Achse - umfaßt, ist das Gerät mit auf kleiner Fläche unterhalb des kastenförmigen Gehäuses angeordneten Auflagepunkten standfest und kann bei vorhandenen Rollen leicht bewegt werden. Unterhalb des kastenförmigen Gehäuses ist weiterhin bevorzugt ein Freiraum für die Füße der Bedienungsperson vorgesehen, wobei der Träger für die Auflagepunkte (Rollen) ein zur Bedienungsperson offenes, parallel zum Erdboden gerichtetes "U" bildet.

Ein Videogerät im Bereich unterhalb der Schubladen braucht - nach dem Laden des Aufzeichnungsträgers - nicht direkt manuell bedient zu werden.

Durch die Zusammenfassung der Merkmale entsprechend den vorteilhaften Weiterbildungen wird ein Informationsgerät geschaffen, welches in günstiger Weise die im Praxisbereich zu nutzenden Informations- und Demonstrationsmöglichkeiten in einem Gerät zusammenfaßt, wobei durch die gewählte Gehäuseausführung eine Reinigung - entsprechend klinischen Anforderungen - ohne weiteres möglich ist. Damit wird erreicht, daß die Informationsträger ohne Einschränkungen nutzbar sind, d.h., daß der Arzt im Behandlungszimmer nach Abschluß der Sprechstunden oder in kurzen Wartezeiten unmittelbar auf die dargebotenen Informationen zurückgreifen kann und auch während der Behandlung die Beratung der Patienten durch Demonstrationen unterstützen kann. Auf diese Weise ergibt sich ein komprimiertes Informationsangebot, welches in dieser Eindringlichkeit bisher nicht dargeboten werden konnte.

Gerade die Kombination der Nutzung verschiedener Informationsträger wie Video-Kassetten oder Bildschirmtext mit der ärztlichen Demonstration und Erläuterung von körperlichen Modellen, ist in seiner Eindringlichkeit kaum zu übertreffen und unterstützt den angestrebten Behandlungserfolg. Bei der Kombination mit einem Btx-Anschluß kann manuell oder automatisch gesteuert auf Informationen zurückgegriffen werden, welche in den beiden Medien angeboten werden, wobei die Darbietung von kurzen Szenenabläufen von der Video-Kassette umrahmt werden von graphischen Darstellungen und Textsequenzen, welche über Bildschirmtext abrufbar sind und laufend aktualisiert werden können. Insoweit bietet sich auch die Aufstellung in Wartezimmern an, wobei durch die fortlaufende Aktualisierung auch Patienten, welche in relativ dichter zeitlicher Folge Behandlungstermine wahrnehmen, stets Informationen mit Neuigkeitswert angeboten werden können.

Die spritzwassergeschützte Ausführung mit glatten Gehäuseoberflächen fügt sich auch gestalterisch zeitlos in das Praxismobiliar ein, wobei eine der Würfelform angenäherte Gehäusegestaltung einen maximalen Rauminhalt bei kleinen Kantenmaßen bietet und aufgrund der mit dem Rollenuntergestell erzielten Bodenfreiheit ein kompakter Eindruck erzielt wird und außerdem die Zugänglichkeit des betreffenden Bodenbereiches für Reinigungsarbeiten nicht behindert wird. Außerdem können in diesem Bereich noch bodennahe Behältnisse oder Kleinregale uneingeschränkt bewegt werden. Durch die Beweglichkeit auf Rollen ist es jederzeit möglich, den Frontbereich des Gerätes, welcher sowohl die Bedienungsmittel als auch die Zugriffsmöglichkeiten zu Demonstrationsmaterial bzw. den Bildschirm zur Bildwiedergabe enthält, entsprechend der Blick- oder Zugriffsmöglichkeit ausrichten. Außerdem wird auf diese Weise der laufende Praxisbetrieb möglichst wenig behindert.

Vorteilhafte Weiterbildungen der Erfindung sind in den Unteransprüchen gekennzeichnet bzw. werden bei der nachstehenden Darstellung zusammen mit einer bevorzugten Ausführung der Erfindung näher beschrieben.

Das auf Rollen 1 fahrbare Informationsgerät 2 hat die Gestalt eines Kastens, in welchem hinter einer Klappe 3 ein Wiedergabegerät für einen Bildträger, insbesondere ein Videorecorder oder Bildplattenspieler vorgesehen ist. Der

Träger der Rollen 1 bildet ein horizontal gerichtetes, zum Bedienenden hin offenes "U", das sich unterhalb des kastenförmigen Gehäuses in einem Abstand zu diesem erstreckt. Damit ergibt sich freier Fußraum für eine vor dem Gerät sitzende Person.

Mit dem Kasten ist fest, aber drehbar, ein Monitor 4 mit Bildschirm 5 in Augenhöhe eines Sitzenden befestigt. In einer Pultfläche 6 ist eine Bedienungstastatur 7 mit glatter Oberfläche in Gestalt einer Folientastatur angeordnet. Neben der Bedienungstastatur befindet sich ein Fach 8, welches zur Aufnahme eines Druckers zur Wiedergabe von über Btx eingehenden Informationen bestimmt ist. Der Bildschirm 5 und die Bedienungstastatur 7 sind gegen Spritzwasser geschützt. Dieser Schutz gegen Spritzwasser besteht aus einer wasserfesten Abdichtung von aneinandergrenzenden Montageteilen des Gehäuses und der von außen erreichbaren elektrischen Ausstattung. Diese Abdichtung erfolgt bevorzugt durch streifenförmiges Dichtungsmaterial, welches in die Zwischenräume eingelegt ist. Die Tastatur ist als Folientastatur ausgebildet, d.h., daß sie eine ebene Fläche bildet und keine relativ zueinander beweglichen Elemente enthält, welche separate Dichtungen erfordern würden. Die spritzwasserdichte Ausführung beinhaltet in diesem Fall ein festes Anliegen der Folienkanten an den angrenzenden Gehäuseteilen oder benachbarten äußeren Bauelementen.

In einer unteren Schublade 9 sind Unterteilungen für Videokassetten vorgesehen, während in einer darüber angeordneten Schublade 10 Unterteilungen für und

LOG33.1-EU          Blatt 9

zahnärztliches Demonstrationsmaterial und zahnärztliche Instrumente vorgesehen sind. Der linke Teil der unteren Schublade 9 wird durch eine rückseitig beleuchtete Milchglasplatte 11 ausgefüllt, welche die Betrachtung von Röntgenbildern ermöglicht. Die Schubladen und die Tastatur sind griffgünstig für einen Sitzenden angeordnet. Den Unterteilungen in den Schubladen können optische Kennzeichnungen zugeordnet sein, um das Einsortieren von Instrumenten, Demonstrationsmaterial und Videokassetten zu erleichtern.

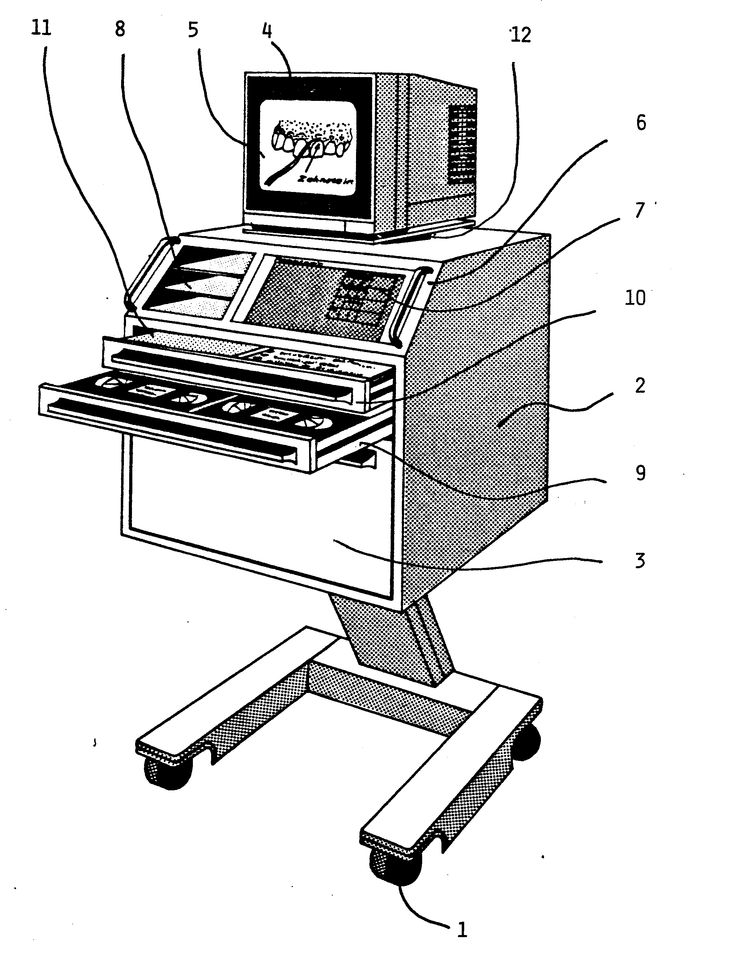

Der Monitor 4 ist auf einem Teller 12 drehbar angeordnet, so daß der Bildschirm 5 an die Betrachtungsrichtung angepaßt werden kann. Ein in der Zeichnung nicht sichtbares Fach hinter der unteren Abdeckplatte 3 ist an einen üblichen Drucker angepaßt, der für das Beschriften von Papierbögen des Formats DIN A4 geeignet ist.

Die Anordnung in der in der Figur wiedergegebenen Position ist stabil, kompakt und leicht beweglich. Sie kann innerhalb einer ärztlichen Praxis als Informationsgerät überall eingesetzt werden. Die Schubladen ergeben in ausgezogenem Zustand für eine sitzende Person Arbeitsflächen für eine interaktive Kommunikation, wobei hier Aufbewahrungsbehälter, Unterstützungsflächen für Demonstrationsobjekte und Betrachungssflächen für Röntgenbilder in funktionaler Kombination vereinigt sind. Durch verschiedene Schubladen lassen sich die im Zusammenhang mit der visuellen Kommunikation benötigten Objekte schnell wechseln. Da die herausziehbaren Schubladenteile mit Inhalt im Vergleich zur übrigen Anordnung (einschließlich der Geräte) der

/10

relativ leicht ausgebildet sind, verliert sie auch bei weit herausgezogenen Schubladen nicht ihre Standfestigkeit.

Die ergonomische Gestaltung des so geschaffenen Arbeitsgerätes enthält den Bildschirm 5 in horizontalem Abstand ausgerichtet in Kopfhöhe des sitzenden Betrachters. Die Bedienungstasten 7 sind mindestens mit ausgestreckten Armen erreichbar, während die Schubladen 10 und 11 von der sitzenden Person sowohl von oben eingesehen werden können als auch im direkten Zugriffsbereich (mit angewinkelten Armen) gelegen sind.

Die dargestellte Ausführungsform stellt lediglich ein Beispiel dar, welches innerhalb des Rahmens der Erfindung für die vorgesehene Aufgabenstellung in weitem Maße abwandelbar ist. Die Erfindung betrifft dabei auch selbständig die Ausführungsform gemäß Anspruch 16 mit Weiterbildungen entsprechend den Ansprüchen 1 bis 15.

*  *  *  *  *

Ansprüche

1.      Informationsgerät mit einem Wiedergabeteil für Bildinformationen, einem Bildschirm sowie Bedienungstasten, insbesondere zur Verwendung in Arztpraxen,

d a d u r c h   g e k e n n z e i c h n e t ,

daß der Wiedergabeteil, der Bildschirm (5) und die Bedienungstasten (7) gegen Spritzwasser geschützt ausgebildet sind und daß eine Tastatur mit darin zusammengefaßten Bedienungstasten eine glatte, ebenfalls gegen eindringendes Spritzwasser geschützte Bedienungsoberfläche aufweist.

2.      Informationsgerät nach Anspruch 1, d a d u r c h   g e k e n n z e i c h n e t ,  daß der Bildschirm (5) durch eine spritzwasserdicht eingesetzte Scheibe geschützt ist.

3.      Informationsgerät nach Anspruch 1 und 2, d a - d u r c h   g e k e n n z e i c h n e t ,  daß darin ein Btx-Anschluß mit entsprechenden Bedienungstasten integriert ist.

4.      Informationsgerät nach einem der vorangehenden Ansprüche, d a d u r c h   g e k e n n z e i c h n e t , daß als Tastatur (7) eine Folientastatur vorgesehen ist.

5.    Informationsgerät nach einem der vorangehenden Ansprüche, d a d u r c h   g e k e n n z e i c h n e t , daß
der Bildschirm (5) in Augenhöhe eines Sitzenden angeordnet
ist.

6.    Informationsgerät nach einem der vorangehenden Ansprüche, d a d u r c h   g e k e n n z e i c h n e t , daß
alle Bedienungselemente, insbesondere die Bedienungstasten
(7) in Griffhöhe eines Sitzenden angeordnet sind.

7.    Informationsgerät nach einem der vorangehenden
Ansprüche, d a d u r c h   g e k e n n z e i c h n e t ,
daß die Tastatur (7) pultartig ausgebildet ist.

8.    Informationsgerät nach einem der vorangehenden
Ansprüche, d a d u r c h   g e k e n n z e i c h n e t ,
daß mindestens eine herauszieh- oder schwenkbare Schublade
(9, 10), bevorzugt in Griffhöhe eines Sitzenden,
vorgesehen ist.

9.    Informationsgerät nach Anspruch 8, d a d u r c h
g e k e n n z e i c h n e t , daß die Schublade (10) zur
Aufnahme von ärztlichen Instrumenten ausgebildet ist.

10. Informationsgerät nach Anspruch 8 oder 9, d a -d u r c
h   g e k e n n z e i c h n e t , daß die Schublade (9, 10) Unterteilungen aufweist, die an die Form von Videokassetten und/oder ärztliches, insbesondere zahnärztliches Demonstrationsmaterial bzw. zahnäztliche Instrumente angepaßt ist.

11.    Informationsgerät nach Anspruch 9 oder 10, d a - d u r c h   g e k e n n z e i c h n e t ,   daß die Unterteilungen aus Kunststoff, insbesondere Schaumstoff, oder tiefgezogenem Blech geformt sind.

12.    Informationsgerät nach einem der vorangehenden Ansprüche, d a d u r c h   g e k e n n z e i c h n e t , mindestens ein Teil einer Schublade (10) eine rückseitig beleuchtbare diffus transparente Platte aufweist, welche als Lichtquelle zur Betrachtung von Röntgenbildern dient.

13.    Informationsgerät nach einem der vorangehenden Ansprüche, d a d u r c h   g e k e n n z e i c h n e t , daß Rollen (1) aufweist, welche in einem Abstand unterhalb des Gehäusekastens (2) angeordnet sind, so daß sich freier Fußraum ergibt.

14.    Informationsgerät nach einem der vorangehenden Ansprüche, d a d u r c h   g e k e n n z e i c h n e t , daß ein Fach (8) vorgesehen ist, dessen Innenmaße an die Außenmaße eines üblichen Druckers für DINA4-Format angepaßt sind.

15.    Informationsgerät nach einem der vorangehenden Ansprüche, d a d u r c h   g e k e n n z e i c h n e t , daß ein den Bildschirm (5) enthaltender Monitor (4) auf einem Teller (12) drehbar angeordnet ist.

16. Informationsgerät, insbesondere nach einem der vorangehenden Ansprüche, d a d u r c h   g e k e n n - z e i c h n e t , daß die Bedienungstastatur (7) oberhalb der Schubladen bzw. Auszüge (9 und 10) und unterhalb des Bildschirms (5) derart vorgesehen ist, daß sich bei mindestens teilweise herausgezogenen Schubladen die der sitzenden Bedienungsperson zugewandten Zugriffs- und Betätigungsflächen im wesentlichen in einem horizontalen bis pultförmig ansteigenden Bereich befinden, während der Bildschirm vertikal vor der Person ausgerichtet ist, und daß die vorstehend genannten Elemente bei eingeschobenen Schubladen bzw. Auszügen eine im wesentlichen kastenförmig geschlossene Kontur bilden.

*  *  *  *  *

/15

0140822